# EUROPEAN PATENT SPECIFICATION

(11) **EP 4 156 173 B1**
(45) Date of publication and mention of the grant of the patent: **01.07.2026**
(21) Application number: 21905186.9
(22) Date of filing: 23.09.2021
(51) Int. Cl.: G10L 13/02, G06F 3/0482, G06F 3/04842, G06V 40/16, H04L 67/12, H04L 69/40, H04N 7/15, H04L 67/55, G06Q 10/02, G06Q 10/04, G06Q 10/06, G06Q 30/015, G06Q 30/0202, G06Q 30/0241, G06Q 50/40, G06Q 50/26

(54) **NON-CONTACT INTELLIGENT CUSTOMER SERVICE SYSTEM APPLIED TO RAIL TRANSIT**
KONTAKTLOSES INTELLIGENTES KUNDENDIENSTSYSTEM FÜR SCHIENENVERKEHR
SYSTÈME INTELLIGENT DE SERVICE À LA CLIENTÈLE SANS CONTACT APPLIQUÉ À UN TRANSIT FERROVIAIRE

(30) Priority: 18.12.2020 CN 202011500384
(43) Date of publication of application: 29.03.2023
(73) Proprietor: CASCO SIGNAL LTD., Shanghai 200071 (CN)
(72) Inventor: YANG, Shuanglei, Shanghai 200071 (CN); HU, Enhua, Shanghai 200071 (CN); ZHANG, Bingjian, Shanghai 200071 (CN); PEI, Jiafu, Shanghai 200071 (CN); LIN, Li, Shanghai 200071 (CN); ZHU, Xiangping, Shanghai 200071 (CN); ZHENG, Ning, Shanghai 200071 (CN); LIU, Dewei, Shanghai 200071 (CN)
(74) Representative: Sun, Yiming
(86) International application number: PCT/CN2021/119757
(87) International publication number: WO 2022/127255

(56) References cited:
- CN-A- 107 358 309
- CN-A- 109 598 453
- CN-A- 109 598 453
- CN-A- 110 264 578
- CN-A- 110 264 578
- CN-A- 110 329 319
- CN-A- 111 669 439
- CN-A- 112 001 514
- CN-A- 112 001 514
- CN-A- 112 637 317
- US-A1- 2020 177 725

## Description

### FIELD OF TECHNOLOGY

The present invention relates to the field of urban rail transit, and in particular to a contactless intelligent passenger-service system applied to rail transit and an application method thereof.

### BACKGROUND

In recent years, with the continuous development and advancement of big data, artificial intelligence technology and smart cities, passengers have put forward higher demands on travel convenience, personalization, and self-service. In addition, in the current situation of the coexistence between the coronavirus and human life, the epidemic has had a great impact on people's travel and life. Especially, it is necessary to avoid contact in the use of rail transit, which serves the public, so as to reduce the spread of the virus. Therefore, it is imminent to achieve intelligentization and informatization of passenger service terminals at rail transit stations, and to prevent epidemic at the same time.

The existing passenger service generally is provided manually using the ticket booth and the passenger service center, or the vehicle control room is also used as the service center. In addition, the existing service terminal functions are relatively simple, and more manual participation is required to complete it, which is not conducive to improving the operational service level and operational efficiency.

CN109598453A relates to a passenger intelligent dispatching and commanding system and method for urban rail transit. The system comprises an OCC equipment room, OCC scheduling room equipment, a station passenger flow perception, recognition and analysis device, a vehicle-mounted passenger flow perception, recognition and analysis device and a communication backbone network. The OCC equipment room, the OCC scheduling room equipment, the station passenger flow perception, recognition and analysis device and the vehicle-mounted passenger flow perception, recognition and analysis device are connected through the communication backbone network.

CN110264578A discloses a passenger service system for the urban rail transit. The system comprises passenger service terminal devices for inputting service request instructions, a line network customer service server being respectively in communication connection with all passenger service terminal devices in a rail transit line network through a line network backbone looped network and a first network device, a second network device connected with the line network customer service server, and at least two customer service work terminals connected with the second network device respectively. The line network customer service server is used for receiving the service request instructions, acquiring state information of the at least two customer service work terminals and sending the service request instruction to the customer service work terminal with the longest idle state time based on the state information, so that the corresponding customer service work terminal establishes audio and video communication connection with the passenger service terminal devices through the first network device to complete the remote service. Therefore, the workload fullness of the customer service personnel is improved effectively and the operation cost is saved.

CN112001514A provides an intelligent passenger service system. The intelligent passenger service system is composed of a cloud center layer, a station layer, a train layer and a mobile terminal layer. The cloud center layer takes a cloud center platform as a core, faces a center passenger dispatcher and is used for providing a whole-line passenger intelligent service comprehensive monitoring service; the station layer takes a station platform as a core, faces passengers in a station and is used for accessing a service terminal in the station; the train layer takes a train platform as a core, faces passengers on a train and is used for accessing a service terminal in the train; and the mobile terminal layer takes a mobile terminal as a core, faces passengers and operators, is an entrance for the passengers to log in the system, and is a mobile window for the operators to operate and manage.

### SUMMARY

An objective of the present invention is to overcome the defects in the prior art, and provide a contactless intelligent passenger-service system applied to rail transit and an application method thereof.

To achieve the above-mentioned object, the present invention is set out in the appended claims.

### BRIEF DESCRIPTION OF THE DRAWINGS

FIG. 1 is a schematic diagram of a system structure according to the present invention;
FIG. 2 is a flowchart of an intelligent passenger service system according to the present invention; and
FIG. 3 is a flowchart of intelligent passenger service man-machine interaction according to the present invention, where
   1 represents a station machine room, 2 represents a station control room, 3 represents an intelligent passenger-service platform server, 4 represents an intelligent passenger-service interface server, 5 represents network isolation equipment, 6 represents a system switch, 7 represents a station maintenance workstation, 8 represents an intelligent passenger service terminal, 9 represents an interface, and 10 represents a passenger service center.

### DESCRIPTION OF THE EMBODIMENTS

The technical solutions of the embodiments of the present invention are clearly described below with reference to the accompanying drawings in the present invention. Apparently, the described embodiments are some rather than all of the embodiments of the present invention.

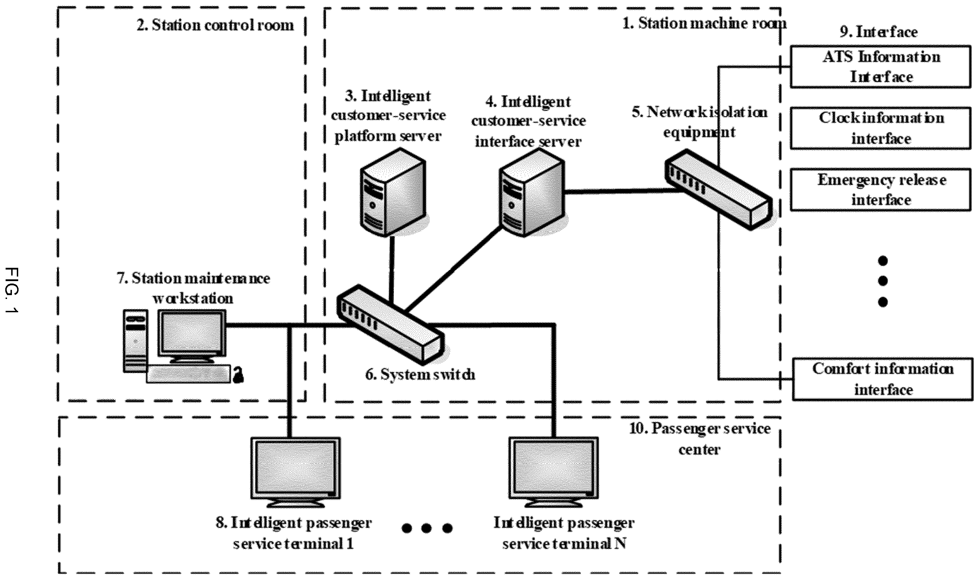

As shown in FIG. 1, the present invention is applied to a contactless intelligent passenger-service system of rail transit. The system includes a station machine room 1, a station control room 2, a system switch 6, and an intelligent passenger service terminal 8. The station machine room 1 is provided with an intelligent passenger-service platform server 3 and an intelligent passenger-service interface server 4. The intelligent passenger-service platform server 3, the intelligent passenger-service interface server 4, and the passenger intelligent service terminal 8 are connected by a system switch 6 in a star shape.

As shown in FIG. 1, the intelligent passenger-service interface server 4 has an interface protocol conversion function, and supports standard protocols and private protocols of a plurality of professional system interfaces. Each system interface information is accessed by using the system switch 6. The each system information of the interface 9 includes:
external system interface information: a weather forecast, a subway line map, a bus and subway transfer information, and the like.

The internal relevant system interfaces of rail transit include: an ATS system interface, a clock system interface, a first- and last-train system interface, an emergency message system interface, a congestion system interface, and the like.

A linkage engine built in the intelligent passenger-service platform server 3 performs digital conversion on a linkage result through the system switch 6 and pushes the converted result to the intelligent passenger service terminal 8 in the form of text, picture, and video. The performance parameters of the intelligent passenger-service platform server 3 are determined by a quantity of intelligent passenger service terminals 8.

The station maintenance workstation 7, referred to as a workstation for maintaining the intelligent passenger service system, is connected to the intelligent passenger-service platform server 3, the intelligent passenger-service interface server 4, the intelligent passenger service terminal 8 through the system switch 6, thereby deploying and maintaining software of the intelligent passenger-service platform server 3, the intelligent passenger service terminal 8, and the system switch 6.

The intelligent passenger service terminal 8 mainly includes three parts: an LCD display, a power controller, and a broadcast control host. In addition, considering the impact of the current epidemic on people's travel and life, and especially the particularity of the population-intensive tool such as rail transit, with the operation and deployment of the subway operating company for epidemic prevention and control, the terminal is integrated with cameras, microphone equipment, somatosensory sensor, and touch screens. The camera is configured to perceive the appearance characteristics of passengers; and the microphone equipment is configured for interaction with the passenger service center and speech self-service inquiry when a manual service is required. When using the somatosensory sensors to support the contactless interaction between passengers and service terminals, through gesture operations on the terminal and supplementary speech recognition interaction, the passengers can enjoy a new experience of human-machine somatosensory interaction, while avoiding unnecessary contact with public equipment. The touch screen is only used as a supplement to normal operation.

The passenger service terminal is integrated with microphone equipment, which is used for interaction with the passenger service center and voice self-service inquiry when manual service is required. Speech recognition is performed by mainly using a speech synthesis module and a speech dictation module, which realize the mutual conversion and interaction between text information and sound information. When the terminal is not used, the terminal stays on a wake-up interface on which a publicity poster or an advertisement of a rail transit station may be posted, and the main interface is designed for eye-catching wake-up guidance; and when a passenger uses the terminal, the passenger is guided to wake up the terminal through a keyword set on the wake-up interface, the device switches to an operating state of the main interface, and all interfaces support a speech interaction function and respond to an instruction of an operator in time.

The passenger service terminal is integrated with a face recognition camera. The camera is configured to perceive appearance characteristics of a passenger, determine the age, gender, and country of the passenger through the face recognition, and customize and push, according to a recognition result, a human-machine interface, a human-machine interaction language, and interactive information that meet the passenger's characteristics, and the system continuously performs machine learning based on the recognition record, trains a relationship model and knowledge management database, and pushes more personalized information.

The passenger service terminal is integrated with a touch screen and a somatosensory sensor, so that the terminal has a somatosensory interaction function. Based on the wide application of 3D sensors, gesture interaction has been widely popularized. Therefore, the system uses gesture interaction to perform the somatosensory interaction function. All instructions and operations of passengers can be completed through gestures, thereby avoiding unnecessary contact with terminal equipment and reducing the way the virus spreads. The touch screen can be used as a regular operation method after the epidemic prevention and control are completed, and passengers can tap the screen to conduct self-service inquiry services.

The passenger service terminal has an intelligent information-service inquiry function, this system is configured to establish a data model and analyze and select big data according to frequently asked questions about passenger travel at subway stations of the rail transit, and this system, with a more friendly human-machine interface and interactive design, provides passengers with a faster and more customized inquiry experience, reducing passenger retention time, and allowing passengers to obtain the most needed information efficiently and quickly.

The passenger service terminal is provided with an intelligent navigation guidance function, and the intelligent navigation guidance function includes in-station navigation, station surrounding navigation, and transfer guidance. Based on the Bluetooth positioning and navigation technology, with the third-party commercial navigation software, the system of the present invention performs navigation inside and outside the rail transit subway station, making up for the blank that the current commercial navigation cannot cover the subway station.

The intelligent passenger service system has an intelligent riding guidance function. The intelligent passenger service system accesses ATS driving information, first- and last-train information, congestion degree information, and the like. In addition to a series of information of train operation in real time, the passenger is further provided with information about closure of entrances and exits, a station operation adjustment due to a large passenger flow and the like, and an emergency such as a fire, a large-scale train delay, a terrorist attack, and a natural disaster, so as to guide the passenger to travel or avoid an impact of the operational adjustment.

The passenger service terminal has a manual call service function. When the system cannot meet needs of a passenger or the passenger has urgent needs for help, a real-time video call for inquiry can be made to station staff who are responsible for processing inquiries, and the system should be equipped with mobile video intercom equipment for station staff.

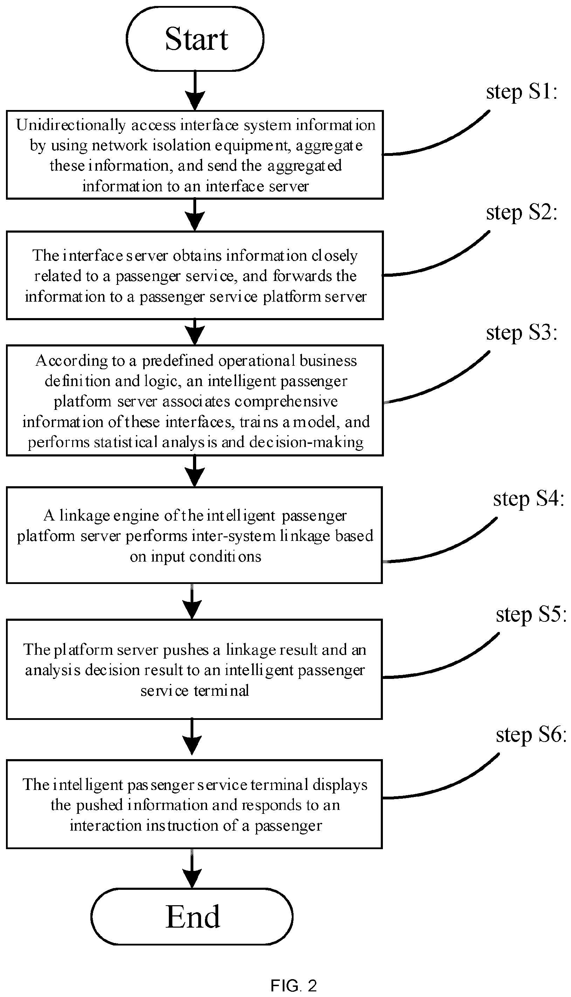

As shown in FIG. 2, an application method for an intelligent passenger service system based on a smart station includes the following steps:
step 1: Unidirectionally access each interface system information by using network isolation equipment, aggregate these information, and send the aggregated information to an interface server, where each of interface systems includes: a weather forecast, a subway line map, bus and subway transfer information, an ATS system, a clock system, a first- and last-train system interface, an emergency message system interface, and a congestion degree system interface.

The weather forecast interface can provide the system with information such as a current day weather, a dynamic weather forecast in next 1 to 3 hours, and a weather in next 7 days; the subway line map interface can provide the system with a latest urban rail transit subway line map; the bus and subway transfer information interface can provide the system with transfer information between an urban subway and a ground public transportation system, and the transfer information includes travel time, congestion degrees, walking distances, travel costs, and transfer times of a travel path; the ATS system interface can provide the system with information on whether an operating train is in a normal operating mode, a main operating condition of a signal system, and an operating timetable; the clock system interface can provide the system with reference master clock time information; the first- and last-train system interface can provide the system with a timetable of a first and last trains of each station of a rail transit subway, avoiding the impact on the daily travel of passengers; the emergency message system interface can provide the system with release of various emergency messages, such as a fire, a large-scale train delay, a terrorist attack, and a natural disaster, where the fire information may be provided by a FAS subsystem interface of a smart station, the large-scale train delay information may be provided by an ATS subsystem interface of the smart station, and the terrorist attack information and natural disaster information may be provided by a PIS information release system of the smart station; and the congestion degree system interface can provide the system with the congestion degree and comfort information of last three train cars that are about to arrive at the station, so that passengers can freely choose a carriage with a relatively small number of passengers, thereby improving passengers' comfort and satisfaction with subway rides.

step 2: The interface server obtains information closely related to a passenger service, and forwards the information to a passenger service platform server, where information closely related to passenger scheduling includes a weather forecast, a subway line map, bus and subway transfer information, an ATS system, a clock system, a first- and last-train system interface, an emergency message system interface, a congestion system interface, and the like.

Step 3: A perception module is embedded and integrated in the intelligent passenger service terminal, including an intelligent face recognition camera, a speech recognition module, a touch screen and a somatosensory module. The camera is configured to perceive the appearance characteristics of passengers; the microphone speech module is used for speech self-service inquiry and interaction with the passenger service center when a passenger needs a manual service; the touch screen supports the passenger to tap the screen for self-service inquiry services, and is taken only as a backup method for somatosensory interaction; and the somatosensory sensor is configured to support touchless interactions with the passenger.

Step 4: A business analysis engine of the intelligent passenger-service platform server, according to a predefined business rule or logic, performs correlation analysis and decision-making on the comprehensive information of each system interface described in step 2, big data analysis and management of inquiry records, and model training, and provides data input support for a linkage engine.

Step 5: The linkage engine automatically responds to the passenger's interactive instructions on the service terminal, and based on a workflow mechanism, organically links systems supporting businesses of the weather forecast, the subway line map, and bus and subway transfer information with the ATS system, a clock system, a first- and last-train system, an emergency message system, and a congestion degree system together, and according to a predefined passenger service mechanism, a serial or parallel response to a passenger's interactive command on the service terminal is performed.

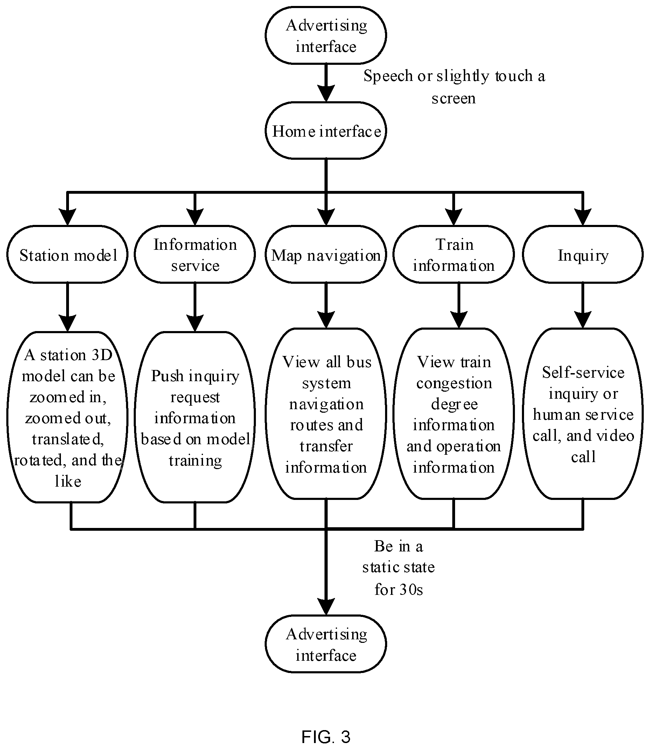

Step 6: As shown in a human-machine interaction flowchart of FIG. 3, the human-machine interaction interface design of the intelligent passenger service terminal is friendly and intuitive, and the human-machine interaction interface specifically includes:

### (1) Advertising interface module

In an advertising interface, it is designed to display texts, pictures, and videos in rotation, where speech wake-up guidance is set up in a central region of the interface. In this way, a passenger is guided to wake up the system by using a speech involving a keyword, and then the system exits the advertising interface module, that is, enters a face recognition interface. The system automatically switches back to the advertising interface module without sensing an operation of the passenger within 30s.

### (2) Home page module

The home page function design mainly includes system time display, station 3D model display, general emergency message display, and a home page button, an information service button, a map button, a train information button, and an inquiry button. When the passenger taps the button on the interface, the system interface automatically switches to a corresponding interface.

### (3) Information service module

The information service module is mainly configured to display an interface of an information service list and corresponding list content. The information service list is on the left side of the display interface, and when the passenger taps a data bar in the list, corresponding information data content is displayed on the right side. The passenger can do what they need according to the displayed information, reducing the process of passengers consulting with the staff of the station service center.

### (4) Map navigation module

The map module displays all route maps of a subway and ground buses in a whole city, and when a passenger enters information of a starting station and of a terminal station to query a route, a route plan and details thereof are highlighted on the route map, so that the passenger can quickly find a travel and transfer route as well as transfer information.

### (5) Train information module

A train information function is designed to display first- and last-train time information of a transfer line, running information of upward and downward trains, information of first two trains of different lines, a name of a next station, terminal station information, arrival time information, and comfort information according to different platforms. The text information is displayed in a standard color corresponding to a line name, and information of different lines is displayed in rotation.

### (6) Inquiry module

The inquiry module is integrated with Al interaction. The system responds to and answers in real time questions raised by users. Approximately 10 popular questions pushed for self-service inquiry and a manual service call button are set on an inquiry interface. When in need of a manual service, a passenger can tap an online connection button to enter a video connection interface, and enter a connection interface after connecting. The interface includes a personal video, a volume status, connection duration information, and a disconnection button.

### (7) Full-screen emergency message module

When an emergency occurs at the station, the intelligent passenger service terminal equipment automatically switches to the full-screen emergency message mode. Such design is used to display the emergency message content in time to remind passengers that an emergency situation occurs, so as to quickly and effectively evacuate the station site. After that, the interface returns to the advertising interface.

## Claims

1. A contactless intelligent passenger service system applied to rail transit, comprising:
an intelligent passenger service platform server (3), an intelligent passenger service interface server (4), a network isolation equipment (5), a system switch (6), a station maintenance workstation (7) adapted to maintain the intelligent passenger service system, and an intelligent passenger service terminal (8), wherein the system switch (6) is connected to each of the intelligent passenger service platform server (3), the intelligent passenger service interface server (4), the station maintenance workstation (7), and the intelligent passenger service terminal (8);
wherein the intelligent passenger service interface server (4) has an interface protocol conversion function, and supports standard protocols and private protocols of a plurality of professional system interfaces (9);
wherein the intelligent passenger service terminal (8) is adapted to provide, through AI interaction and intelligent speech, a passenger with intelligent services that comprise information inquiry and display of various facilities inside a station, information inquiry of convenient surrounding facilities, information inquiry of a train operation status, and emergency help;
wherein the intelligent passenger service interface server (4) is adapted to access professional system interface (9) information of the plurality of professional system interfaces (9) through the network isolation equipment (5), wherein the professional system interface (9) information comprises external system interface information and internal relevant system interface information of the rail transit, the external system interface information comprises a weather forecast, a subway line map, and bus and subway transfer information, and the internal relevant system interface information of the rail transit comprises ATS driving information, clock system information, first- and last-train information, emergency news release information, and congestion degree information;
wherein the external system interface information is information of external system interfaces of the plurality of professional system interfaces (9), wherein the external system interfaces include a weather forecast interface, a subway line map interface, a bus and subway transfer information interface;
wherein the internal relevant system interface information is information of internal relevant system interfaces of the plurality of professional system interfaces (9), wherein the internal relevant system interfaces include an ATS system interface, a clock system interface, a first- and last-train system interface, an emergency message system interface, and a congestion degree system interface;
wherein the network isolation equipment (5) has a network isolation function and a unidirectional data flow communication function;
wherein the network isolation equipment (5) is connected to the intelligent passenger service interface server (4) and is adapted to connect to the plurality of professional system interfaces (9); and
wherein the intelligent passenger service interface server (4) is configured to forward the professional system interface information to the intelligent passenger service platform server (3); a linkage engine built in the intelligent passenger service platform server is adapted to automatically respond to interactive instructions of the passenger on the intelligent passenger service terminal (8), process the professional system interface information to produce a linkage result, perform digital conversion on the linkage result through the system switch and push the converted linkage result to the intelligent passenger service terminal in the form of text, picture and video; and the intelligent passenger service terminal is adapted to display the pushed information.

2. The contactless intelligent passenger service system applied to rail transit according to claim 1, wherein the intelligent passenger service platform server (3) comprises a background application service processing module and a database management module; and a performance parameter of the intelligent passenger service platform server (3) is determined by a quantity of the intelligent passenger service terminals (8).

3. The contactless intelligent passenger service system applied to rail transit according to claim 1, wherein the station maintenance workstation (7), serving as a client of a system service program, is connected to each of the intelligent passenger service platform server (3), the intelligent passenger service interface server (4), and the intelligent passenger service terminal (8) through the system switch (6), so as to deploy and maintain software of an intelligent passenger service system.

4. The contactless intelligent passenger service system applied to rail transit according to claim 1, wherein the intelligent passenger service terminal (8) comprises an LCD display or an OLED transparent display for display, a power controller for power control, a broadcast control host for playback control, a camera configured to sense appearance characteristics of a passenger, microphone equipment for an interaction with a passenger service center (10) and speech self-service inquiry during a manual service, a somatosensory sensor configured to support a contactless operation interaction between the passenger and a service terminal, and a touch screen for supplementary means of a conventional operation.

5. The contactless intelligent passenger service system applied to rail transit according to claim 4, wherein the microphone equipment is used for the interaction with the passenger service center (10) when a manual service is required, and for the speech self-service inquiry, wherein the speech recognition comprises a speech synthesis module and a speech dictation module that are configured to achieve mutual conversion and interaction between text information and sound information.

6. The contactless intelligent passenger service system applied to rail transit according to claim 5, wherein when the intelligent passenger service terminal (8) is not used, the terminal is adapted to stay on a wake-up interface on which a publicity poster or an advertisement of a rail transit station is posted, and the main interface is designed for eye-catching wake-up guidance; and when a passenger uses the terminal, the terminal is adapted to be woken up by the passenger guided through a keyword set on the wake-up interface, the device is adapted to switch to an operating state of the main interface, and all interfaces support a speech interaction function and are adapted to respond to an instruction of an operator in time.

7. The contactless intelligent passenger service system applied to rail transit according to claim 4, wherein the camera is a face recognition camera, the face recognition camera is configured to perceive appearance characteristics of a passenger, determine the age, gender, and country of the passenger through the face recognition, and customize and push, according to a recognition result, a human-machine interface, a human-machine interaction language, and interactive information that meet the passenger's characteristics, and the system is adapted to continuously perform machine learning based on the recognition record, train a relationship model and knowledge management database, and push more personalized information.

8. The contactless intelligent passenger service system applied to rail transit according to claim 4, wherein the somatosensory sensor uses a gesture interaction method to perform a somatosensory interaction function, wherein all instructions and operations of the passenger can be completed by using gestures, and the touch as a conventional operation manner supports the passenger to perform the self-service inquiry service by touching a screen.

9. The contactless intelligent passenger service system applied to rail transit according to claim 1, wherein the intelligent passenger service terminal (8) comprises an intelligent information-service inquiry module, so as to be adapted to establish a data model and analyze and select big data according to frequently asked questions about passenger travel at subway stations of the rail transit, such that in combination with a more friendly human-machine interface and interactive design, a faster and more customized inquiry experience is provided for a passenger; and
The Intelligent information-service inquiry module is integrated with Al interaction, and adapted to respond to and answer in real time questions raised by users, wherein 10 popular questions pushed for self-service inquiry and a manual service call button are set on an inquiry interface, such that when in need of a manual service, a passenger taps an online connection button to enter a video connection interface, and enters a connection interface after connecting, and the interface includes a personal video, a volume status, connection duration information, and a disconnection button.

10. The contactless intelligent passenger service system applied to rail transit according to claim 1, wherein the intelligent passenger service terminal (8) comprises an intelligent navigation guidance module for in-station navigation, station surrounding navigation, and transfer guidance, and the intelligent navigation guidance module is combined with third-party commercial navigation software to achieve navigation inside and outside a rail transit subway station based on Bluetooth positioning and navigation technology; and
a map module in the intelligent navigation guidance module is adapted to display all route maps of a subway and ground buses in a whole city, and when a passenger enters information of a starting station and of a terminal station to query a route, a route plan and details thereof are highlighted on the route map, so that the passenger can quickly find a travel and transfer route as well as transfer information.

11. The contactless intelligent passenger service system applied to rail transit according to claim 1, wherein the intelligent passenger service terminal (8) is equipped with an intelligent riding guidance module, the intelligent riding guidance module is adapted to access ATS, first- and last-train information, and congestion degree information, such that in addition to a series of information of train operation in real time, a passenger is further provided with information about closure of entrances and exits, a station operation adjustment with a large passenger flow, and an emergency such as a fire, a large-scale train delay, a terrorist attack, and a natural disaster, so as to guide the passenger to travel or avoid an impact of the operational adjustment.

12. The contactless intelligent passenger service system applied to rail transit according to claim 1, wherein the intelligent passenger service terminal (8) is equipped with a manual call service module, wherein when the system cannot meet needs of a passenger or the passenger has urgent needs for help, the manual call service module is adapted to use a real-time video call for inquiry to station staff who are responsible for processing inquiries, and the system should be equipped with mobile video intercom equipment for station staff.

13. The contactless intelligent passenger service system applied to rail transit according to claim 1, wherein the intelligent passenger service terminal (8) further comprises the following functional modules:
an advertising interface module configured to display texts, pictures, and videos in rotation, wherein speech wake-up guidance is set up in a central region of the interface, such that a passenger is guided to wake up the system by using a speech involving a keyword, and then the system exits the advertising interface module, that is, enters a face recognition interface; and the system is adapted to automatically switch back to the advertising interface module without sensing an operation of the passenger within 30s;
a home page module configured for system time display, station 3D model display, general emergency message display, and comprising a home button, an information service button, a map button, a train information button, and an inquiry button, wherein when the passenger taps the button on the interface, the system module is adapted to automatically switch to a corresponding module interface;
an information service module configured to display an interface of an information service list and corresponding list content, wherein the information service list is on the left side of the display interface, and when the passenger taps a data bar in the list, corresponding information data content is displayed on the right side;
a train information module configured to display first- and last-train time information of a transfer line, running information of upward and downward trains, information of first two trains of different lines, a name of a next station, terminal station information, arrival time information, and comfort information, according to different platforms, where the text information is displayed in a standard color corresponding to a line name, and information of different lines is displayed in rotation; and
a full-screen emergency message module, configured to enable intelligent passenger service terminal equipment to automatically switch to a full-screen emergency message mode when an emergency occurs at a station.

## Patentansprüche

1. Kontaktloses intelligentes Fahrgastservicesystem für den Einsatz im Schienenverkehr, umfassend: einen intelligenten Fahrgastservice-Plattformserver (3), einen intelligenten Fahrgastservice-Schnittstellenserver (4), eine Netzisolierungseinrichtung (5), einen Systemswitch (6), einen Stationswartungsarbeitsplatz (7), der dazu ausgebildet ist, das intelligente Fahrgastservicesystem zu warten, und ein intelligentes Fahrgastservice-Terminal (8), wobei der Systemswitch (6) mit jedem des intelligenten Fahrgastservice-Plattformservers (3), des intelligenten Fahrgastservice-Schnittstellenservers (4), des Stationswartungsarbeitsplatzes (7) und des intelligenten Fahrgastservice-Terminals (8) verbunden ist;
wobei der intelligente Fahrgastservice-Schnittstellenserver (4) eine Schnittstellenprotokollumwandlungsfunktion aufweist und Standardprotokolle und private Protokolle einer Mehrzahl von fachspezifischen Systemschnittstellen (9) unterstützt;
wobei das intelligente Fahrgastservice-Terminal (8) dazu ausgebildet ist, einem Fahrgast durch KI-Interaktion und intelligente Sprachinteraktion intelligente Dienste bereitzustellen, die Informationsabfrage und Anzeige verschiedener Einrichtungen innerhalb einer Station, Informationsabfrage zu zweckmäßigen Einrichtungen in der Umgebung, Informationsabfrage eines Zugbetriebszustands und Nothilfe umfassen;
wobei der intelligente Fahrgastservice-Schnittstellenserver (4) dazu ausgebildet ist, über die Netzisolierungseinrichtung (5) auf Informationen der fachspezifischen Systemschnittstellen (9) der Mehrzahl von fachspezifischen Systemschnittstellen (9) zuzugreifen, wobei die Informationen der fachspezifischen Systemschnittstellen (9) Informationen externer Systemschnittstellen und interne relevante Systemschnittstelleninformationen des Schienenverkehrs umfassen, die Informationen externer Systemschnittstellen eine Wettervorhersage, eine U-Bahn-Linienkarte und Bus- und U-Bahn-Umsteigeinformationen umfassen und die internen relevanten Systemschnittstelleninformationen des Schienenverkehrs ATS-Fahrinformationen, Uhrsysteminformationen, Informationen zur ersten und letzten Bahn, Informationen zur Veröffentlichung von Notfallnachrichten und Informationen zum Überfüllungsgrad umfassen;
wobei die Informationen externer Systemschnittstellen Informationen externer Systemschnittstellen der Mehrzahl von fachspezifischen Systemschnittstellen (9) sind, wobei die externen Systemschnittstellen eine Wettervorhersageschnittstelle, eine U-Bahn-Linienkartenschnittstelle und eine Bus- und U-Bahn-Umsteigeinformationsschnittstelle umfassen;
wobei die internen relevanten Systemschnittstelleninformationen Informationen interner relevanter Systemschnittstellen der Mehrzahl von fachspezifischen Systemschnittstellen (9) sind, wobei die internen relevanten Systemschnittstellen eine ATS-Systemschnittstelle, eine Uhrsystemschnittstelle, eine Systemschnittstelle für die erste und letzte Bahn, eine Notfallnachrichtensystemschnittstelle und eine Systemschnittstelle für den Überfüllungsgrad umfassen;
wobei die Netzisolierungseinrichtung (5) eine Netzisolierungsfunktion und eine unidirektionale Datenfluss-Kommunikationsfunktion aufweist;
wobei die Netzisolierungseinrichtung (5) mit dem intelligenten Fahrgastservice-Schnittstellenserver (4) verbunden und dazu ausgebildet ist, mit der Mehrzahl von fachspezifischen Systemschnittstellen (9) verbunden zu werden; und
wobei der intelligente Fahrgastservice-Schnittstellenserver (4) dazu ausgebildet ist, die Informationen der fachspezifischen Systemschnittstellen an den intelligenten Fahrgastservice-Plattformserver (3) weiterzuleiten; eine in den intelligenten Fahrgastservice-Plattformserver eingebaute Linkage-Engine dazu ausgebildet ist, automatisch auf Interaktionsanweisungen des Fahrgasts an dem intelligenten Fahrgastservice-Terminal (8) zu reagieren, die Informationen der fachspezifischen Systemschnittstellen zu verarbeiten, um ein Linkage-Ergebnis zu erzeugen, eine digitale Umwandlung des Linkage-Ergebnisses über den Systemswitch durchzuführen und das umgewandelte Linkage-Ergebnis in Form von Text, Bild und Video an das intelligente Fahrgastservice-Terminal zu übertragen; und das intelligente Fahrgastservice-Terminal dazu ausgebildet ist, die übertragenen Informationen anzuzeigen.

2. Kontaktloses intelligentes Fahrgastservicesystem für den Einsatz im Schienenverkehr nach Anspruch 1, wobei der intelligente Fahrgastservice-Plattformserver (3) ein Hintergrundanwendungsdienst-Verarbeitungsmodul und ein Datenbankverwaltungsmodul umfasst; und ein Leistungsparameter des intelligenten Fahrgastservice-Plattformservers (3) durch eine Anzahl der intelligenten Fahrgastservice-Terminals (8) bestimmt wird.

3. Kontaktloses intelligentes Fahrgastservicesystem für den Einsatz im Schienenverkehr nach Anspruch 1, wobei der Stationswartungsarbeitsplatz (7), der als ein Client eines Systemdienstprogramms dient, mit jedem des intelligenten Fahrgastservice-Plattformservers (3), des intelligenten Fahrgastservice-Schnittstellenservers (4) und des intelligenten Fahrgastservice-Terminals (8) über den Systemswitch (6) verbunden ist, um Software eines intelligenten Fahrgastservicesystems bereitzustellen und zu warten.

4. Kontaktloses intelligentes Fahrgastservicesystem für den Einsatz im Schienenverkehr nach Anspruch 1, wobei das intelligente Fahrgastservice-Terminal (8) eine LCD-Anzeige oder eine transparente OLED-Anzeige zur Anzeige, einen Leistungsregler zur Leistungssteuerung, einen Broadcast-Steuerhost zur Wiedergabesteuerung, eine Kamera, die dazu ausgebildet ist, Erscheinungsmerkmale eines Fahrgasts zu erfassen, Mikrofoneinrichtungen für eine Interaktion mit einem Fahrgastservicezentrum (10) und für eine sprachbasierte Selbstbedienungsabfrage während eines manuellen Dienstes, einen somatosensorischen Sensor, der dazu ausgebildet ist, eine kontaktlose Betriebsinteraktion zwischen dem Fahrgast und einem Serviceterminal zu unterstützen, und einen Touchscreen als ergänzendes Mittel einer herkömmlichen Bedienung umfasst.

5. Kontaktloses intelligentes Fahrgastservicesystem für den Einsatz im Schienenverkehr nach Anspruch 4, wobei die Mikrofoneinrichtungen für die Interaktion mit dem Fahrgastservicezentrum (10), wenn ein manueller Dienst erforderlich ist, und für die sprachbasierte Selbstbedienungsabfrage verwendet werden, wobei die Spracherkennung ein Sprachsynthesemodul und ein Sprachdiktiermodul umfasst, die dazu ausgebildet sind, eine gegenseitige Umwandlung und Interaktion zwischen Textinformationen und Toninformationen zu erreichen.

6. Kontaktloses intelligentes Fahrgastservicesystem für den Einsatz im Schienenverkehr nach Anspruch 5, wobei, wenn das intelligente Fahrgastservice-Terminal (8) nicht verwendet wird, das Terminal dazu ausgebildet ist, auf einer Aufweckschnittstelle zu verbleiben, auf der ein Werbeplakat oder eine Werbung einer Schienenverkehrsstation angezeigt ist, und die Hauptschnittstelle für eine auffällige Aufweckführung ausgelegt ist; und wenn ein Fahrgast das Terminal verwendet, das Terminal dazu ausgebildet ist, durch den Fahrgast aufgeweckt zu werden, der durch ein auf der Aufweckschnittstelle eingestelltes Schlüsselwort geführt wird, die Vorrichtung dazu ausgebildet ist, in einen Betriebszustand der Hauptschnittstelle umzuschalten, und alle Schnittstellen eine Sprachinteraktionsfunktion unterstützen und dazu ausgebildet sind, rechtzeitig auf eine Anweisung eines Bedieners zu reagieren.

7. Kontaktloses intelligentes Fahrgastservicesystem für den Einsatz im Schienenverkehr nach Anspruch 4, wobei die Kamera eine Gesichtserkennungskamera ist, die Gesichtserkennungskamera dazu ausgebildet ist, Erscheinungsmerkmale eines Fahrgasts zu erfassen, das Alter, das Geschlecht und das Land des Fahrgasts durch die Gesichtserkennung zu bestimmen und gemäß einem Erkennungsergebnis eine Mensch-Maschine-Schnittstelle, eine Mensch-Maschine-Interaktionssprache und Interaktionsinformationen anzupassen und zu übertragen, die die Merkmale des Fahrgasts erfüllen, und das System dazu ausgebildet ist, auf der Grundlage des Erkennungsdatensatzes fortlaufend maschinelles Lernen durchzuführen, ein Beziehungsmodell und eine Wissensmanagement-Datenbank zu trainieren und stärker personalisierte Informationen zu übertragen.

8. Kontaktloses intelligentes Fahrgastservicesystem für den Einsatz im Schienenverkehr nach Anspruch 4, wobei der somatosensorische Sensor ein Gesteninteraktionsverfahren verwendet, um eine somatosensorische Interaktionsfunktion auszuführen, wobei alle Anweisungen und Bedienungen des Fahrgasts unter Verwendung von Gesten abgeschlossen werden können, und das Berühren als herkömmliche Betriebsart den Fahrgast dabei unterstützt, den Selbstbedienungsabfragedienst durch Berühren eines Bildschirms auszuführen.

9. Kontaktloses intelligentes Fahrgastservicesystem für den Einsatz im Schienenverkehr nach Anspruch 1, wobei das intelligente Fahrgastservice-Terminal (8) ein intelligentes Informationsdienst-Abfragemodul umfasst, so dass es dazu ausgebildet ist, ein Datenmodell aufzubauen und Big Data gemäß häufig gestellten Fragen zu Fahrten von Fahrgästen an U-Bahn-Stationen des Schienenverkehrs zu analysieren und auszuwählen, so dass in Kombination mit einer benutzerfreundlicheren Mensch-Maschine-Schnittstelle und Interaktionsgestaltung einem Fahrgast eine schnellere und stärker angepasste Abfrageerfahrung bereitgestellt wird; und
das intelligente Informationsdienst-Abfragemodul mit KI-Interaktion integriert ist und dazu ausgebildet ist, Fragen, die von Benutzern gestellt werden, in Echtzeit zu beantworten, wobei 10 beliebte Fragen, die zur Selbstbedienungsabfrage übertragen werden, und eine Taste für einen manuellen Dienstaufruf auf einer Abfrageschnittstelle eingestellt sind, so dass ein Fahrgast bei Bedarf an einem manuellen Dienst auf eine Online-Verbindungstaste tippt, um in eine Videoverbindungsschnittstelle einzutreten, und nach dem Verbinden in eine Verbindungsschnittstelle eintritt, wobei die Schnittstelle ein persönliches Video, einen Lautstärkezustand, Verbindungsdauerinformationen und eine Trennungstaste umfasst.

10. Kontaktloses intelligentes Fahrgastservicesystem für den Einsatz im Schienenverkehr nach Anspruch 1, wobei das intelligente Fahrgastservice-Terminal (8) ein intelligentes Navigationsführungsmodul für stationsinterne Navigation, umgebende Stationsnavigation und Umsteigeführung umfasst, und das intelligente Navigationsführungsmodul mit Navigationssoftware Dritter kombiniert ist, um auf Bluetooth-Positionierung und Navigationstechnologie basierende Navigation innerhalb und außerhalb einer Schienenverkehrs-U-Bahn-Station zu erreichen; und
ein Kartenmodul in dem intelligenten Navigationsführungsmodul dazu ausgebildet ist, alle Streckenkarten einer U-Bahn und von Bodenbussen in einer gesamten Stadt anzuzeigen, und wenn ein Fahrgast Informationen einer Startstation und einer Zielstation eingibt, um eine Strecke abzufragen, ein Streckenplan und Einzelheiten davon auf der Streckenkarte hervorgehoben werden, so dass der Fahrgast schnell eine Fahrt- und Umsteigestrecke sowie Umsteigeinformationen finden kann.

11. Kontaktloses intelligentes Fahrgastservicesystem für den Einsatz im Schienenverkehr nach Anspruch 1, wobei das intelligente Fahrgastservice-Terminal (8) mit einem intelligenten Fahrhinweismodul ausgestattet ist, das intelligente Fahrhinweismodul dazu ausgebildet ist, auf ATS, Informationen zur ersten und letzten Bahn und Informationen zum Überfüllungsgrad zuzugreifen, so dass einem Fahrgast zusätzlich zu einer Reihe von Informationen zum Zugbetrieb in Echtzeit ferner Informationen über die Schließung von Ein- und Ausgängen, eine Betriebsanpassung einer Station mit großem Fahrgastaufkommen und einen Notfall wie einen Brand, eine großflächige Zugverspätung, einen Terrorangriff und eine Naturkatastrophe bereitgestellt werden, um den Fahrgast zum Reisen zu führen oder ihn die Auswirkungen der Betriebsanpassung vermeiden zu lassen.

12. Kontaktloses intelligentes Fahrgastservicesystem für den Einsatz im Schienenverkehr nach Anspruch 1, wobei das intelligente Fahrgastservice-Terminal (8) mit einem manuellen Rufdienstmodul ausgestattet ist, wobei das manuelle Rufdienstmodul, wenn das System Bedürfnisse eines Fahrgasts nicht erfüllen kann oder der Fahrgast dringende Hilfsbedürfnisse hat, dazu ausgebildet ist, eine Echtzeit-Videoanrufabfrage zu Stationspersonal zu verwenden, das für die Bearbeitung von Anfragen verantwortlich ist, und das System mit mobiler Video-Gegensprechanlagenausrüstung für Stationspersonal ausgestattet ist.

13. Kontaktloses intelligentes Fahrgastservicesystem für den Einsatz im Schienenverkehr nach Anspruch 1, wobei das intelligente Fahrgastservice-Terminal (8) ferner die folgenden Funktionsmodule umfasst:
ein Werbeschnittstellenmodul, das dazu ausgebildet ist, Texte, Bilder und Videos im Rotationsbetrieb anzuzeigen, wobei in einem zentralen Bereich der Schnittstelle eine sprachbasierte Aufweckführung eingerichtet ist, so dass ein Fahrgast geführt wird, das System durch Verwendung einer Sprache, die ein Schlüsselwort umfasst, aufzuwecken, und dann das System das Werbeschnittstellenmodul verlässt, das heißt in eine Gesichtserkennungsschnittstelle eintritt; und das System dazu ausgebildet ist, automatisch in das Werbeschnittstellenmodul zurückzuschalten, ohne innerhalb von 30 s eine Bedienung des Fahrgasts zu erfassen;
ein Startseitenmodul, das zur Anzeige der Systemzeit, zur Anzeige eines 3D-Modells der Station, zur Anzeige einer allgemeinen Notfallnachricht ausgebildet ist und eine Startseitentaste, eine Informationsdiensttaste, eine Kartentaste, eine Zuginformationstaste und eine Abfragetaste umfasst, wobei, wenn der Fahrgast auf die Taste auf der Schnittstelle tippt, das Systemmodul dazu ausgebildet ist, automatisch zu einer entsprechenden Modulschnittstelle umzuschalten;
ein Informationsdienstmodul, das dazu ausgebildet ist, eine Schnittstelle einer Informationsdienstliste und entsprechenden Listeninhalt anzuzeigen, wobei die Informationsdienstliste auf der linken Seite der Anzeigeschnittstelle angeordnet ist, und wenn der Fahrgast auf eine Datenleiste in der Liste tippt, entsprechender Informationsdateninhalt auf der rechten Seite angezeigt wird;
ein Zuginformationsmodul, das dazu ausgebildet ist, Informationen zu Zeiten der ersten und letzten Bahn einer Umsteigelinie, Betriebsinformationen von aufwärts und abwärts fahrenden Zügen, Informationen zu den ersten zwei Zügen verschiedener Linien, einen Namen einer nächsten Station, Zielstationsinformationen, Ankunftszeitinformationen und Komfortinformationen gemäß verschiedenen Bahnsteigen anzuzeigen, wobei die Textinformationen in einer einer Linienbezeichnung entsprechenden Standardfarbe angezeigt werden, und Informationen verschiedener Linien im Rotationsbetrieb angezeigt werden; und
ein Vollbild-Notfallnachrichtenmodul, das dazu ausgebildet ist, intelligente Fahrgastservice-Terminalausrüstung automatisch in einen Vollbild-Notfallnachrichtenmodus umzuschalten, wenn ein Notfall an einer Station auftritt.

## Revendications

1. Système intelligent de service aux passagers sans contact appliqué au transit ferroviaire, comprenant : un serveur de plateforme intelligente de service aux passagers (3), un serveur d'interface intelligente de service aux passagers (4), un équipement d'isolation de réseau (5), un commutateur système (6), un poste de travail de maintenance de station (7) adapté à maintenir le système intelligent de service aux passagers, et un terminal intelligent de service aux passagers (8), dans lequel le commutateur système (6) est connecté à chacun du serveur de plateforme intelligente de service aux passagers (3), du serveur d'interface intelligente de service aux passagers (4), du poste de travail de maintenance de station (7) et du terminal intelligent de service aux passagers (8) ;
dans lequel le serveur d'interface intelligente de service aux passagers (4) a une fonction de conversion de protocole d'interface, et prend en charge des protocoles standard et des protocoles privés d'une pluralité d'interfaces de système spécialisées (9) ;
dans lequel le terminal intelligent de service aux passagers (8) est adapté à fournir, au moyen d'une interaction IA et d'une interaction vocale intelligente, à un passager des services intelligents comprenant une interrogation d'informations et un affichage de diverses installations à l'intérieur d'une station, une interrogation d'informations de commodités environnantes, une interrogation d'informations sur un état de fonctionnement d'un train, et une aide d'urgence ;
dans lequel le serveur d'interface intelligente de service aux passagers (4) est adapté à accéder, par l'intermédiaire de l'équipement d'isolation de réseau (5), à des informations d'interface de système spécialisée (9) de la pluralité d'interfaces de système spécialisées (9), dans lequel les informations d'interface de système spécialisée (9) comprennent des informations d'interface de système externe et des informations d'interface de système interne pertinente du transit ferroviaire, les informations d'interface de système externe comprenant une prévision météorologique, un plan de ligne de métro, et des informations de correspondance bus-métro, et les informations d'interface de système interne pertinente du transit ferroviaire comprenant des informations de conduite ATS, des informations de système d'horloge, des informations de premier et dernier train, des informations de diffusion de nouvelles d'urgence, et des informations de degré de congestion ;
dans lequel les informations d'interface de système externe sont des informations d'interfaces de système externes de la pluralité d'interfaces de système spécialisées (9), dans lequel les interfaces de système externes comprennent une interface de prévision météorologique, une interface de plan de ligne de métro, une interface d'informations de correspondance bus-métro ;
dans lequel les informations d'interface de système interne pertinente sont des informations d'interfaces de système internes pertinentes de la pluralité d'interfaces de système spécialisées (9), dans lequel les interfaces de système internes pertinentes comprennent une interface de système ATS, une interface de système d'horloge, une interface de système de premier et dernier train, une interface de système de messages d'urgence, et une interface de système de degré de congestion ;
dans lequel l'équipement d'isolation de réseau (5) a une fonction d'isolation de réseau et une fonction de communication de flux de données unidirectionnel ;
dans lequel l'équipement d'isolation de réseau (5) est connecté au serveur d'interface intelligente de service aux passagers (4) et est adapté à être connecté à la pluralité d'interfaces de système spécialisées (9) ; et
dans lequel le serveur d'interface intelligente de service aux passagers (4) est configuré pour transmettre les informations d'interface de système spécialisée au serveur de plateforme intelligente de service aux passagers (3) ; un moteur de liaison intégré dans le serveur de plateforme intelligente de service aux passagers est adapté à répondre automatiquement à des instructions interactives du passager sur le terminal intelligent de service aux passagers (8), à traiter les informations d'interface de système spécialisée pour produire un résultat de liaison, à effectuer une conversion numérique du résultat de liaison par l'intermédiaire du commutateur système et à pousser le résultat de liaison converti vers le terminal intelligent de service aux passagers sous forme de texte, d'image et de vidéo ; et le terminal intelligent de service aux passagers est adapté à afficher les informations poussées.

2. Système intelligent de service aux passagers sans contact appliqué au transit ferroviaire selon la revendication 1, dans lequel le serveur de plateforme intelligente de service aux passagers (3) comprend un module de traitement de service d'application en arrière-plan et un module de gestion de base de données ; et un paramètre de performance du serveur de plateforme intelligente de service aux passagers (3) est déterminé par une quantité des terminaux intelligents de service aux passagers (8).

3. Système intelligent de service aux passagers sans contact appliqué au transit ferroviaire selon la revendication 1, dans lequel le poste de travail de maintenance de station (7), servant de client d'un programme de service système, est connecté à chacun du serveur de plateforme intelligente de service aux passagers (3), du serveur d'interface intelligente de service aux passagers (4) et du terminal intelligent de service aux passagers (8) par l'intermédiaire du commutateur système (6), de manière à déployer et à maintenir un logiciel d'un système intelligent de service aux passagers.

4. Système intelligent de service aux passagers sans contact appliqué au transit ferroviaire selon la revendication 1, dans lequel le terminal intelligent de service aux passagers (8) comprend un affichage LCD ou un affichage transparent OLED pour l'affichage, un contrôleur d'alimentation pour la commande d'alimentation, un hôte de commande de diffusion pour la commande de lecture, une caméra configurée pour détecter des caractéristiques d'apparence d'un passager, un équipement de microphone pour une interaction avec un centre de service aux passagers (10) et une interrogation vocale en libre-service pendant un service manuel, un capteur somatosensoriel configuré pour prendre en charge une interaction de fonctionnement sans contact entre le passager et un terminal de service, et un écran tactile comme moyen complémentaire d'une opération conventionnelle.

5. Système intelligent de service aux passagers sans contact appliqué au transit ferroviaire selon la revendication 4, dans lequel l'équipement de microphone est utilisé pour l'interaction avec le centre de service aux passagers (10) lorsqu'un service manuel est requis, et pour l'interrogation vocale en libre-service, dans lequel la reconnaissance vocale comprend un module de synthèse vocale et un module de dictée vocale qui sont configurés pour réaliser une conversion mutuelle et une interaction entre des informations de texte et des informations sonores.

6. Système intelligent de service aux passagers sans contact appliqué au transit ferroviaire selon la revendication 5, dans lequel lorsque le terminal intelligent de service aux passagers (8) n'est pas utilisé, le terminal est adapté à rester sur une interface de réveil sur laquelle une affiche publicitaire ou une publicité d'une station de transit ferroviaire est affichée, et l'interface principale est conçue pour un guidage de réveil accrocheur ; et lorsque le passager utilise le terminal, le terminal est adapté à être réveillé par le passager guidé au moyen d'un mot-clé défini sur l'interface de réveil, le dispositif est adapté à commuter à un état de fonctionnement de l'interface principale, et toutes les interfaces prennent en charge une fonction d'interaction vocale et sont adaptées à répondre en temps utile à une instruction d'un opérateur.

7. Système intelligent de service aux passagers sans contact appliqué au transit ferroviaire selon la revendication 4, dans lequel la caméra est une caméra de reconnaissance faciale, la caméra de reconnaissance faciale est configurée pour percevoir des caractéristiques d'apparence d'un passager, déterminer l'âge, le sexe et le pays du passager au moyen de la reconnaissance faciale, et personnaliser et pousser, selon un résultat de reconnaissance, une interface homme-machine, une langue d'interaction homme-machine, et des informations interactives qui correspondent aux caractéristiques du passager, et le système est adapté à effectuer en continu un apprentissage automatique sur la base du dossier de reconnaissance, à entraîner un modèle de relation et une base de données de gestion des connaissances, et à pousser des informations plus personnalisées.

8. Système intelligent de service aux passagers sans contact appliqué au transit ferroviaire selon la revendication 4, dans lequel le capteur somatosensoriel utilise une méthode d'interaction gestuelle pour exécuter une fonction d'interaction somatosensorielle, dans lequel toutes les instructions et opérations du passager peuvent être réalisées au moyen de gestes, et le toucher, en tant que mode de fonctionnement conventionnel, permet au passager d'exécuter le service d'interrogation en libre-service en touchant un écran.

9. Système intelligent de service aux passagers sans contact appliqué au transit ferroviaire selon la revendication 1, dans lequel le terminal intelligent de service aux passagers (8) comprend un module intelligent d'interrogation de service d'information, de manière à être adapté à établir un modèle de données et à analyser et sélectionner des mégadonnées selon des questions fréquemment posées concernant les déplacements des passagers dans des stations de métro du transit ferroviaire, de telle sorte qu'en combinaison avec une interface homme-machine plus conviviale et une conception interactive, une expérience d'interrogation plus rapide et plus personnalisée soit fournie à un passager ; et
le module intelligent d'interrogation de service d'information est intégré à l'interaction IA, et adapté à répondre et à répondre en temps réel à des questions soulevées par des utilisateurs, dans lequel 10 questions populaires poussées pour l'interrogation en libre-service et un bouton d'appel de service manuel sont prévus sur une interface d'interrogation, de telle sorte que lorsqu'un service manuel est nécessaire, un passager touche un bouton de connexion en ligne pour entrer dans une interface de connexion vidéo, et entre dans une interface de connexion après connexion, et l'interface comprend une vidéo personnelle, un état de volume, des informations de durée de connexion, et un bouton de déconnexion.

10. Système intelligent de service aux passagers sans contact appliqué au transit ferroviaire selon la revendication 1, dans lequel le terminal intelligent de service aux passagers (8) comprend un module intelligent de guidage de navigation pour une navigation dans la station, une navigation autour de la station, et un guidage de correspondance, et le module intelligent de guidage de navigation est combiné à un logiciel de navigation commerciale tiers pour réaliser une navigation à l'intérieur et à l'extérieur d'une station de métro de transit ferroviaire sur la base d'une technologie de positionnement et de navigation Bluetooth ; et
un module de carte dans le module intelligent de guidage de navigation est adapté à afficher toutes les cartes de lignes d'un métro et des bus terrestres dans une ville entière, et lorsqu'un passager saisit des informations d'une station de départ et d'une station terminale pour interroger un itinéraire, un plan d'itinéraire et ses détails sont mis en évidence sur la carte d'itinéraire, de sorte que le passager puisse rapidement trouver un itinéraire de déplacement et de correspondance ainsi que des informations de correspondance.

11. Système intelligent de service aux passagers sans contact appliqué au transit ferroviaire selon la revendication 1, dans lequel le terminal intelligent de service aux passagers (8) est équipé d'un module intelligent de guidage de trajet, le module intelligent de guidage de trajet étant adapté à accéder à l'ATS, aux informations de premier et dernier train, et aux informations de degré de congestion, de telle sorte qu'en plus d'une série d'informations en temps réel sur l'exploitation des trains, un passager reçoit en outre des informations sur la fermeture d'entrées et de sorties, un ajustement de fonctionnement de station avec un flux important de passagers, et une urgence telle qu'un incendie, un retard de train à grande échelle, une attaque terroriste, et une catastrophe naturelle, de manière à guider le passager à se déplacer ou à éviter un impact de l'ajustement de fonctionnement.

12. Système intelligent de service aux passagers sans contact appliqué au transit ferroviaire selon la revendication 1, dans lequel le terminal intelligent de service aux passagers (8) est équipé d'un module de service d'appel manuel, dans lequel lorsque le système ne peut pas répondre à des besoins d'un passager ou que le passager a des besoins urgents d'aide, le module de service d'appel manuel est adapté à utiliser un appel vidéo en temps réel pour une interrogation auprès de personnel de station chargé de traiter des interrogations, et le système est équipé d'un équipement mobile d'interphone vidéo pour le personnel de station.

13. Système intelligent de service aux passagers sans contact appliqué au transit ferroviaire selon la revendication 1, dans lequel le terminal intelligent de service aux passagers (8) comprend en outre les modules fonctionnels suivants :
un module d'interface publicitaire configuré pour afficher des textes, des images, et des vidéos en rotation, dans lequel un guidage de réveil vocal est prévu dans une région centrale de l'interface, de telle sorte qu'un passager soit guidé pour réveiller le système au moyen d'une parole comprenant un mot-clé, puis le système quitte le module d'interface publicitaire, c'est-à-dire entre dans une interface de reconnaissance faciale ; et le système est adapté à revenir automatiquement au module d'interface publicitaire sans détecter une opération du passager dans un délai de 30 s ;
un module de page d'accueil configuré pour un affichage de l'heure du système, un affichage d'un modèle 3D de station, un affichage général de message d'urgence, et comprenant un bouton d'accueil, un bouton de service d'information, un bouton de carte, un bouton d'information de train, et un bouton d'interrogation, dans lequel lorsque le passager touche le bouton sur l'interface, le module du système est adapté à commuter automatiquement vers une interface de module correspondante ;
un module de service d'information configuré pour afficher une interface d'une liste de services d'information et un contenu de liste correspondant, dans lequel la liste de services d'information est sur le côté gauche de l'interface d'affichage, et lorsque le passager touche une barre de données dans la liste, un contenu de données d'information correspondant est affiché sur le côté droit ;
un module d'information de train configuré pour afficher des informations d'heure de premier et dernier train d'une ligne de correspondance, des informations de circulation de trains montants et descendants, des informations des deux premiers trains de différentes lignes, un nom d'une station suivante, des informations de station terminale, des informations d'heure d'arrivée, et des informations de confort, selon différentes plates-formes, où les informations de texte sont affichées dans une couleur standard correspondant à un nom de ligne, et des informations de différentes lignes sont affichées en rotation ; et
un module de message d'urgence plein écran, configuré pour permettre à un équipement de terminal intelligent de service aux passagers de commuter automatiquement vers un mode de message d'urgence plein écran lorsqu'une urgence survient dans une station.
